# EUROPÄISCHE PATENTANMELDUNG

(11) **EP 3 336 385 A1**
(43) Veröffentlichungstag der Anmeldung: **20.06.2018**
(21) Anmeldenummer: 17201777.4
(22) Anmeldetag: 15.11.2017
(51) Int. Cl.: F16H 57/04

(54) **ANORDNUNG ZUM SCHMIEREN EINES GETRIEBES, KRAFTFAHRZEUGGETRIEBE UND KRAFTFAHRZEUG**

(30) Priorität: 16.12.2016 DE 102016225255
(71) Anmelder: ZF Friedrichshafen AG, 88046 Friedrichshafen (DE)
(72) Erfinder: Pfeffer, Andreas, 94505 Bernried (DE)

(57) **Zusammenfassung**

Die Erfindung betrifft eine Anordnung (2) zum Schmieren eines Getriebes (3), umfassend eine Welle (1) mit mindestens einer Axialbohrung (4), mindestens einer in die Axialbohrung (4) mündenden radialen Zuführbohrung (5) und mindestens einer in die Axialbohrung (4) mündenden radialen Austrittsbohrung (10, 10'), wobei die Welle (1) in eine erste Drehrichtung und in eine zweite Drehrichtung (6) axial drehbar angeordnet ist. Die erfindungsgemäße Anordnung (2) zeichnet sich dadurch aus, dass die mindestens eine Zuführbohrung (5) eine derartige Neigung gegen eine einen radialen Wellenmittelpunkt schneidende Gerade (7) aufweist, dass eine radial äußere Öffnung (5') der mindestens einen Zuführbohrung (5) gegenüber einer radial inneren Öffnung (5") der mindestens einen Zuführbohrung (5) entlang der zweiten Drehrichtung (6) einen Kreiswinkelversatz (α) aufweist. Die Erfindung betrifft weiterhin ein entsprechendes Kraftfahrzeuggetriebe (3) und ein entsprechendes Kraftfahrzeug.

## Beschreibung

Die Erfindung betrifft eine Anordnung zum Schmieren eines Getriebes gemäß dem Oberbegriff von Anspruch 1 sowie ein entsprechendes Kraftfahrzeuggetriebe und ein entsprechendes Kraftfahrzeug.

Im Stand der Technik ist es bekannt, dass Getriebe für Kraftfahrzeuge im Betrieb mittels Öl gekühlt und geschmiert werden müssen, um unnötigen Verschleiß und Beschädigungen zu vermeiden. Durch eine ausreichende Schmierung verbessert sich zudem die Effizienz des Getriebes. Um einen regelmäßigen Ölstrom bereitstellen zu können, sind in der Regel Ölpumpen vorgesehen, die das Öl aus einem Reservoir entnehmen und es den zu kühlenden und zu schmierenden Getriebebereichen zuführen. Anschließend kann das Öl durch eine Kühlvorrichtung gekühlt und wieder zurück zum Reservoir geführt werden.

In diesem Zusammenhang beschreibt die EP 0 481 014 ein vielstufiges Zahnräderwechselgetriebe, umfassend eine Vielzahl von Wellen und Losrädern. Die Wellen weisen dabei axiale Ölkanäle mit Radialbohrungen auf, wobei von einem zentralen Pumpenantrieb druckbeaufschlagt Öl in die axialen Ölkanäle gefördert wird. Durch die Radialbohrungen tritt das Öl aus und gelangt an die zu schmierenden bzw. zu kühlenden Getriebebereiche, wie z.B. an die Lagerstellen von Losrädern.

Der Anmelderin ist weiterhin eine Getriebeanordnung für ein Kraftfahrzeug bekannt, bei welcher eine Ölförderpumpe von einer Getriebewelle angetrieben wird, sofern die Drehrichtung der Getriebewelle einer Vorwärtsfahrt des Fahrzeugs entspricht. Bei einer Rückwärtsfahrt hingegen wird die Ölförderpumpe nicht angetrieben bzw. rückwärts angetrieben, so dass sie kein Öl fördert. Im Betrieb der Ölförderpumpe fördert die Ölförderpumpe Öl durch eine radiale Bohrung in einen Axialkanal der Welle. Durch weitere Radialbohrungen in der Welle tritt das Öl an Lagerstellen von auf der Welle angeordneten Losrädern aus, um diese zu schmieren.

Die bekannten Getriebeanordnungen sind jedoch insofern nachteilbehaftet, als dass entweder eine vergleichsweise aufwändige und teure Pumpe mit einer Umschaltautomatik vorgesehen sein muss, um beim Umschalten von Vorwärtsfahrt zu Rückwärtsfahrt den Pumpbetrieb aufrecht zu erhalten, oder dass auf den Pumpbetrieb während einer Rückwärtsfahrt verzichtet werden muss, was wiederum mit Einschränkungen hinsichtlich der möglichen Dauer einer Rückwärtsfahrt verbunden ist, um Beschädigungen des bei Rückwärtsfahrt ungekühlten bzw. ungeschmierten Getriebes zu vermeiden.

Es ist eine Aufgabe der vorliegenden Erfindung, eine verbesserte Anordnung zum Schmieren eines Getriebes vorzuschlagen.

Diese Aufgabe wird erfindungsgemäß durch die Anordnung zum Schmieren eines Getriebes gemäß Anspruch 1 gelöst. Vorteilhafte Ausgestaltungen und Weiterbildungen der Erfindung gehen aus den abhängigen Ansprüchen hervor.

Die Erfindung betrifft eine Anordnung zum Schmieren eines Getriebes, umfassend eine Welle mit mindestens einer Axialbohrung, mindestens einer in die Axialbohrung mündenden radialen Zuführbohrung und mindestens einer in die Axialbohrung mündenden radialen Austrittsbohrung, wobei die Welle in eine erste Drehrichtung und in eine zweite Drehrichtung axial drehbar angeordnet ist. Die erfindungsgemäße Anordnung zeichnet sich dadurch aus, dass die mindestens eine Zuführbohrung eine derartige Neigung gegen eine einen radialen Wellenmittelpunkt der Welle schneidende Gerade aufweist, dass eine radial äußere Öffnung der mindestens einen Zuführbohrung gegenüber einer radial inneren Öffnung der mindestens einen Zuführbohrung entlang der zweiten Drehrichtung einen Kreiswinkelversatz aufweist.

Die mindestens eine Zuführbohrung verläuft in ihrer gedachten Verlängerung also nicht durch die Drehachse, d.h. nicht durch den radialen Wellenmittelpunkt der Welle, sondern daran vorbei. Somit ist die mindestens eine Zuführbohrung, wie beschrieben, gegen eine Gerade, die den radialen Wellenmittelpunkt der Welle bzw. die Drehachse schneidet, geneigt. Die Neigung gegen die Gerade ist derart, dass die radial äußere Öffnung der mindestens einen Zuführbohrung gegenüber der radial inneren Öffnung der mindestens einen Zuführbohrung entlang der zweiten Drehrichtung einen Kreiswinkelversatz aufweist. Dies bedeutet, dass bei einer Drehung der Welle entlang der zweiten Drehrichtung die radial äußere Öffnung der radial inneren Öffnung stets um den Kreiswinkelversatz voraus eilt.

Die mindestens eine Zuführbohrung ist dazu ausgebildet, Öl in die mindestens eine Axialbohrung zuführen zu können. Dies kann z.B. mittels einer Druckbeaufschlagung durch eine Fluidförderpumpe oder aufgrund anderer Effekte bewerkstelligt werden.

Die mindestens eine Austrittsbohrung ist dazu ausgebildet, Öl aus der mindestens einen Axialbohrung an das Getriebe bzw. an ein oder mehrere Getriebeelemente abzugeben und diese zu schmieren bzw. zu kühlen.

Bei einer Drehbewegung der Welle wirkt eine Zentrifugalkraft auf das Öl, welches sich in der mindestens einen Axialbohrung, in der mindestens einen Zuführbohrung und in der mindestens einen Austrittsbohrung befindet. Die Zentrifugalkraft führt dazu, dass sich einerseits das in die mindestens eine Axialbohrung zugeführte Öl in der Axialbohrung verteilt und durch die mindestens eine Austrittsbohrung wieder austritt. Andererseits erschwert die Zentrifugalkraft jedoch das Zuführen des Öls durch die mindestens eine Zuführbohrung.

Durch das Zuführen des Öls in die mindestens eine Axialbohrung sowie das anschließende Austreten des Öls durch die mindestens eine Austrittsbohrung kann eine Schmierung bestimmter Getriebeelemente des Getriebes ermöglicht werden. Die mindestens eine Austrittsbohrung befindet sich dazu vorzugsweise in unmittelbarer Nachbarschaft der zu schmierenden Getriebeelemente, so dass das Öl diesen Getriebeelementen gezielt zugeführt wird. Alternativ kann das Öl aufgrund der Drehbewegung der Welle auch durch die mindestens eine Austrittsbohrung versprüht werden, um so beispielsweise mehrere Getriebeelemente in der Umgebung der mindestens einen Austrittsbohrung zu schmieren.

Durch die Neigung der mindestens einen Zuführbohrung gegen die den radialen Wellenmittelpunkt schneidende Gerade und den daraus resultierenden, bereits beschriebenen Kreiswinkelversatz ergibt sich vorteilhaft eine verbesserte Einsammelwirkung auf das Öl bei einer Drehbewegung entlang der zweiten Drehrichtung, wobei das Öl die Welle und insbesondere den Bereich der radial äußeren Öffnung der mindestens einen Zuführbohrung umgibt, so dass dieses vergleichsweise einfacher gegen die Zentrifugalkraft durch die mindestens eine Zuführbohrung in die mindestens eine Axialbohrung gefördert werden kann.

Bevorzugt ist es vorgesehen, dass die mindestens eine Axialbohrung auf der Drehachse, d.h. entlang des radialen Wellenmittelpunkts, verläuft.

Bevorzugt ist es vorgesehen, dass das Getriebe ein Getriebe eines Kraftfahrzeugs ist. In diesem Fall stellt die erste Drehrichtung besonders bevorzugt eine Vorwärtsfahrt des Kraftfahrzeugs dar und die zweite Drehrichtung eine Rückwärtsfahrt des Kraftfahrzeugs.

Gemäß einer bevorzugten Ausführungsform der Erfindung ist es vorgesehen, dass die Neigung derart ausgebildet ist, dass an der äußeren Öffnung angesammeltes Öl bei einer Drehbewegung entlang der zweiten Drehrichtung aufgrund einer Tangentialbeschleunigung des Öls in die mindestens eine Axialbohrung gefördert wird. Somit ergibt sich der Vorteil, dass das Öl, welches die Welle und insbesondere den Bereich der äußeren Öffnung umgibt bzw. sich an der äußeren Öffnung ansammelt, ohne zusätzliche Druckbeaufschlagung, beispielsweise durch eine Fluidförderpumpe, entgegen der Zentrifugalkraft in die mindestens eine Axialbohrung gefördert werden kann. Dies ermöglicht also das Gewährleisten einer Schmierfunktion bzw. Kühlfunktion ohne zusätzliche Fluidförderpumpe.

Zum besseren Verständnis der Förderwirkung müssen die auf das Öl, welches sich an der äußeren Öffnung ansammelt, wirkenden Kräfte betrachtet werden. Zum Einen wirkt hier die Zentrifugalkraft, welche sich rechnerisch nach der Formel F_{Z} = mω²r ergibt, wobei F_{Z} die Zentrifugalkraft beschreibt, m die Masse des angesammelten Öls, ω die Winkelgeschwindigkeit der Drehbewegung der Welle entlang der zweiten Drehrichtung und r den Radius der Welle bzw. die Entfernung des angesammelten Öls von der Drehachse der Welle. Da die mindestens eine Zuführbohrung eine Neigung aufweist, wird der Betrag der das Öl nach außen drängenden Kraft um den Faktor (cos α) verringert, wobei α der Winkel der Neigung gegen die den radialen Mittelpunkt der Welle schneidende Gerade ist. Um das Öl in das Innere der Welle, also in die mindestens eine Axialbohrung, zu fördern, muss folglich eine Kraft des Betrags (cos α) F_{Z} überwunden werden. Dies gelingt durch eine tangentiale Beschleunigungskraft, welche beim Aufnehmen des Öls in die äußere Öffnung kurzfristig auf das Öl wirkt, bis das Öl die Winkelgeschwindigkeit der Welle erreicht hat. Die tangentiale Beschleunigungskraft ergibt sich formal aus dem Zusammenhang F_{TB} = ma, wobei F_{TB} die tangentiale Beschleunigungskraft bezeichnet, m die Masse des angesammelten Öls und a die tangentiale Beschleunigung. Aufgrund der Neigung der mindestens einen Zuführbohrung wird die auf das Öl wirkende tangentiale Beschleunigungskraft um den Faktor (sin α) reduziert. Es wirkt somit folglich eine Kraft des Betrags (sin α) F_{TB} auf das Öl, welche das Öl durch die mindestens eine Zuführbohrung in die mindestens eine Axialbohrung drängt. Sofern also gilt (sin α) F_{TB} > (cos α) F_{Z}, wird das Öl durch die mindestens eine Zuführbohrung in die mindestens eine Axialbohrung gefördert, so dass ohne zusätzliche Fluidpumpe eine Schmierung des Getriebes erfolgen kann.

Das solcherart bewerkstelligte Zuführen des Öls in die mindestens eine Axialbohrung funktioniert abhängig vom Winkel α der Neigung für eine Vielzahl von Drehgeschwindigkeiten der Welle. Der Winkel α der Neigung entspricht dabei aufgrund geometrischer Gesetzmäßigkeiten dem Kreiswinkelversatz α, weshalb beide Begriffe hier synonym verwendet werden.

Gemäß einer weiteren bevorzugten Ausführungsform der Erfindung ist es vorgesehen, dass die Anordnung weiterhin eine Fluidförderpumpe umfasst, wobei die Fluidförderpumpe entlang der ersten Drehrichtung der Welle von der Welle antreibbar ist und entlang der zweiten Drehrichtung der Welle von der Welle nicht antreibbar ist. Daraus ergibt sich der Vorteil, dass bei einer Drehbewegung der Welle entlang der ersten Drehrichtung die Fluidförderpumpe angetrieben wird, so dass sie Öl aus der Umgebung ansaugt und unter einer Druckbeaufschlagung durch die mindestens eine Zuführbohrung fördert. Dies garantiert eine weitgehend optimale Schmierung und Kühlung des Getriebes, solange sich die Welle entlang der ersten Drehrichtung dreht. Auf eine Umschaltautomatik für die Fluidförderpumpe, welche ein Antreiben der Fluidförderpumpe auch entlang der zweiten Drehrichtung ermöglichen würde, kann jedoch vorteilhaft verzichtet werden, da in diesem Fall die Schmierung über die erfindungsgemäße Anordnung gewährleistet wird. Somit kann die Fluidförderpumpe durch den Verzicht auf die Umschaltautomatik vergleichsweise kleiner, leichter und kostengünstiger ausgestaltet sein.

Im Sinne der Erfindung wird unter der Formulierung, dass die Fluidförderpumpe angetrieben wird, verstanden, dass die Fluidförderpumpe Öl fördern kann. Dies ist bei einer Drehbewegung entlang der ersten Drehrichtung der Welle stets der Fall. Bei einer Drehbewegung entlang der zweiten Drehrichtung der Welle hingegen wird die Fluidförderpumpe ggf. zwar ebenfalls entlang der zweiten Drehrichtung betätigt, dies führt jedoch nicht zu einem Antrieb der Fluidförderpumpe dahingehend, dass diese Öl fördert. Die bloße Betätigung der Fluidförderpumpe ist von einem Antrieb der Fluidförderpumpe zu unterscheiden. Ausschließlich im angetriebenen Zustand ist die Fluidförderpumpe in der Lage, Öl zu fördern.

Gemäß einer weiteren bevorzugten Ausführungsform der Erfindung ist es vorgesehen, dass die Anordnung derart ausgebildet ist, dass in die mindestens eine Axialbohrung gefördertes Öl sich bei einer Drehbewegung der Welle entlang der ersten Drehrichtung oder bei einer Drehbewegung der Welle entlang der zweiten Drehrichtung aufgrund einer Zentrifugalkraft in der mindestens einen Axialbohrung verteilt und durch die mindestens eine Austrittsbohrung austritt. Somit kann das einmal in die mindestens eine Axialbohrung geförderte Öl unter Ausnutzen der Zentrifugalkraft ohne weiteres Zutun in der mindestens einen Axialbohrung verteilt und der mindestens einen Austrittsbohrung zugeführt werden. Ebenfalls ausschließlich durch Ausnutzen der Zentrifugalkraft tritt das Öl schließlich durch die mindestens eine Austrittsbohrung aus, um das Getriebe bzw. bestimmte Getriebeelemente zu schmieren.

Gemäß einer weiteren bevorzugten Ausführungsform der Erfindung ist es vorgesehen, dass die Anordnung zwei Axialbohrungen umfasst, wobei die zwei Axialbohrungen beabstandet zum radialen Wellenmittelpunkt angeordnet sind. Daraus ergibt sich der Vorteil, dass die Energie, die dem Öl zum Überwinden des durch die Zentrifugalkraft erzeugten Potentials bis in eine der zwei Axialbohrungen zugeführt werden muss, reduziert werden kann. Somit wird das Zuführen des Öls in die mindestens eine Axialbohrung vereinfacht. Dieser Effekt ergibt sich aus der verkürzten zurückzulegenden Wegstrecke von der äußeren Öffnung bis in die Axialbohrungen, welche nun beabstandet zum radialen Wellenmittelpunkt und somit vergleichsweise näher an der der äußeren Öffnung angeordnet sind.

Gemäß einer weiteren bevorzugten Ausführungsform der Erfindung ist es vorgesehen, dass die Anordnung weiterhin Ölfangtaschen umfasst, welche dazu ausgebildet sind, von Getriebeelementen abspritzendes Öl einzusammeln und der mindestens einen Zuführbohrung zuzuführen. Somit kann vorteilhaft sichergestellt werden, dass stets eine ausreichende Menge Öl zur Verfügung steht, um durch die mindestens eine Zuführbohrung in die mindestens eine Axialbohrung gefördert zu werden und die Schmierung des Getriebes zu gewährleisten.

Bevorzugt ist es vorgesehen, dass das von den Ölfangtaschen eingesammelte Öl über Bohrungen bzw. Kanäle der mindestens einen Zuführbohrung zugeführt wird.

Gemäß einer weiteren bevorzugten Ausführungsform der Erfindung ist es vorgesehen, dass die mindestens eine Austrittsbohrung einem Maschinenelement, insbesondere einer Losradlagerung zugeordnet ist. Somit schmiert das durch die mindestens eine Austrittsbohrung austretende Öl also bevorzugt eine Losradlagerung.

Gemäß einer weiteren bevorzugten Ausführungsform der Erfindung ist es vorgesehen, dass die Welle mindestens eine weitere radiale Zuführbohrung aufweist, wobei die mindestens eine weitere radiale Zuführbohrung auf der den radialen Wellenmittelpunkt der Welle schneidenden Gerade liegt. Die mindestens eine weitere Zuführbohrung ist also nicht gegen die den radialen Wellenmittelpunkt schneidende Gerade geneigt. Daraus ergibt sich der Vorteil, dass die mindestens eine weitere Zuführbohrung besonders für ein Zuführen des Öls mittels einer Fluidförderpumpe geeignet ist. Im Gegensatz zu einer eine Neigung aufweisenden Zuführbohrung ist die mindestens eine weitere Zuführbohrung aufgrund ihrer nicht-geneigten Ausbildungsform vergleichsweise kurz und bietet somit einen nur minimalen Strömungswiderstand. Da bei einer Druckbeaufschlagung des Öls mittels einer Fluidförderpumpe auf die Neigung verzichtet werden kann, stellt eine weitere radiale Zuführbohrung, welche auf der den radialen Wellenmittelpunkt schneidenden Gerade liegt, die effektivste Möglichkeit zur Zuführung des Öls in die mindestens eine Axialbohrung bei einer Drehbewegung der Welle entlang der ersten Drehbewegung dar.

Gemäß einer weiteren bevorzugten Ausführungsform der Erfindung ist es vorgesehen, dass die Welle mindestens eine zusätzliche Zuführbohrung umfasst, wobei die mindestens eine zusätzliche Zuführbohrung eine derartige Neigung gegen eine einen radialen Wellenmittelpunkt der Welle schneidende Gerade aufweist, dass eine radial äußere Öffnung der mindestens einen Zuführbohrung gegenüber einer radial inneren Öffnung der mindestens einen Zuführbohrung entlang der ersten Drehrichtung einen Kreiswinkelversatz aufweist. Daraus ergibt sich der Vorteil, dass durch die bereits beschriebene tangentiale Beschleunigungskraft auch bei einer Drehbewegung der Welle entlang der ersten Drehrichtung eine Schmierung unabhängig von der Förderwirkung der Fluidförderpumpe gewährleistet werden kann. Somit ist prinzipiell das Bereitstellen eines drehrichtungsunabhängigen Schmiersystems möglich, ohne dass hierfür eine Fluidförderpumpe vorgesehen sein muss.

Weiterhin betrifft die Erfindung ein Kraftfahrzeuggetriebe, umfassend mindestens eine erfindungsgemäße Anordnung. Somit ergeben sich die bereits im Zusammenhang mit der erfindungsgemäßen Anordnung beschriebenen Vorteile auch für das erfindungsgemäße Kraftfahrzeuggetriebe.

Die Erfindung betrifft schließlich auch ein Kraftfahrzeug, umfassend ein erfindungsgemäßes Getriebe. Dies führt zu den bereits beschriebenen Vorteilen auch für das erfindungsgemäße Getriebe.

Nachfolgend wird die Erfindung anhand von in den Figuren dargestellten Ausführungsformen beispielhaft erläutert.

Es zeigen:
- Fig. 1: beispielhaft und schematisch eine aus dem Stand der Technik bekannte Welle, welche Bestandteil einer bekannten Anordnung zum Schmieren eines Getriebes ist,
- Fig. 2: beispielhaft und schematisch einen Ausschnitt einer erfindungsgemäßen Anordnung zum Schmieren eines Getriebes und
- Fig. 3: beispielhaft und schematisch ein Getriebe für ein Nutzfahrzeug.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

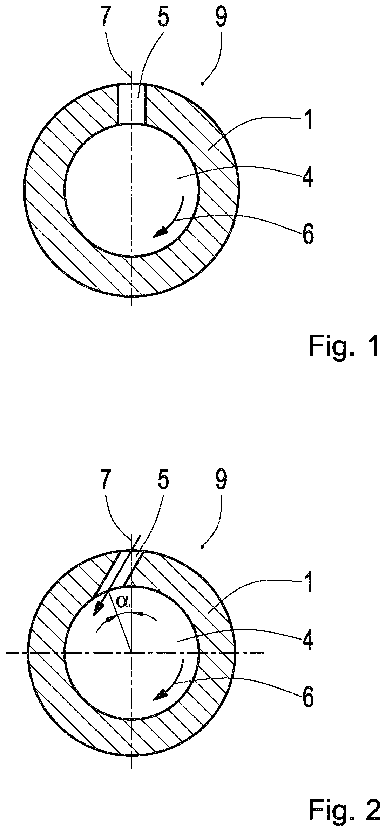

Fig. 1 zeigt beispielhaft und schematisch eine aus dem Stand der Technik bekannte Welle 1, welche Bestandteil einer bekannten Anordnung 2 zum Schmieren eines Getriebes 3 ist. Die bekannte Welle 1 weist in der schematisierten Schnittzeichnung der Fig. 1 eine Axialbohrung 4 und eine in die Axialbohrung 4 mündende radiale Zuführbohrung 5 auf. Wie zu sehen ist, liegt die radiale Zuführbohrung 5 auf einer den radialen Wellenmittelpunkt der Welle 1 schneidenden Geraden 7. Die Axialbohrung 4 liegt auf einem radialen Wellenmittelpunkt der Welle 1 und ist sowohl in eine erste Drehrichtung drehbar als auch in eine zweite Drehrichtung drehbar, welche der ersten Drehrichtung entgegengesetzt ist. Die zweite Drehrichtung wird in Fig. 1 durch den Pfeil 6 veranschaulicht. Beispielsgemäß entspricht die zweite Drehrichtung im Betrieb des Getriebes 3 einer Rückwärtsfahrt eines das Getriebe 3 aufweisenden Kraftfahrzeugs. Die erste Drehrichtung hingegen entspricht einer Vorwärtsfahrt des das Getriebe 3 aufweisenden Kraftfahrzeugs. Die Anordnung 2 zum Schmieren eines Getriebes 3, deren Welle 1 in Fig. 1 schematisch dargestellt ist, umfasst weiterhin eine (in Fig. 1 nicht dargestellte) Fluidförderpumpe 8, wobei die Fluidförderpumpe 8 entlang der ersten Drehrichtung der Welle 1 von der Welle 1 antreibbar ist, also Öl fördern kann, und entlang der zweiten Drehrichtung der Welle 1 von der Welle 1 nicht antreibbar ist, also kein Öl fördern kann. Solange die Fluidförderpumpe 8 angetrieben wird, also solange das Kraftfahrzeug eine Vorwärtsfahrt ausführt, entnimmt die Fluidförderpumpe 8 der Umgebung 9 Öl und fördert es unter einer Druckbeaufschlagung durch die Zuführbohrung 5 in die Axialbohrung 4. Die Umgebung 9 der Welle 1 besteht beispielsgemäß aus Öl. Das in die Axialbohrung 4 geförderte Öl wird bei einer Drehbewegung der Welle 1 aufgrund der durch die Drehbewegung wirkenden Zentrifugalkraft an die Innenseite der Axialbohrung 4 gedrängt und verteilt sich dort. Die spezifische Drehrichtung der Drehbewegung ist für das Wirken der Zentrifugalkraft ohne Bedeutung. Durch das Verteilen des Öls in der Axialbohrung 4 gelangt das Öl auch zu einer oder mehreren (in Fig. 1 nicht dargestellten) in die Axialbohrung 4 mündenden radialen Austrittsbohrungen 10. Durch die Austrittsbohrungen 10 tritt das Öl aufgrund der Zentrifugalkraft aus und schmiert die vorgesehenen Getriebeelemente. Bei einer Drehrichtung der Welle 1 entlang der zweiten Drehrichtung jedoch, was einer Rückwärtsfahrt des Kraftfahrzeugs entspricht, wird die Fluidförderpumpe 8 nicht angetrieben, fördert also kein Öl. Das hat zur Folge, dass bei einer Rückwärtsfahrt des Kraftfahrzeugs keine Schmierung des Getriebes 3 erfolgt. Aus diesem Grund darf ein im Stand der Technik bekanntes Kraftfahrzeug, welches die in Fig. 1 beschriebene Anordnung 2 zum Schmieren eines Getriebes 3 aufweist, keine längeren Rückwärtsfahrten ausführen, da es sonst zu Getriebebeschädigungen bis hin zu einem Getriebetotalausfall kommen kann.

Fig. 2 zeigt beispielhaft und schematisch einen Ausschnitt einer erfindungsgemäßen Anordnung 2 zum Schmieren eines Getriebes 3. Der gezeigte Ausschnitt entspricht dem in Fig. 1 gezeigten Ausschnitt und zeigt ebenfalls einen schematisierten Schnitt durch die Welle 1. Die in Fig. 2 gezeigte Welle 1 unterscheidet sich von der in Fig. 1 gezeigten Welle 1 durch die Ausbildung der radialen Zuführbohrung 5, da die Zuführbohrung 5 der Fig. 2 eine derartige Neigung gegen die den radialen Wellenmittelpunkt schneidende Gerade 7 aufweist, dass eine radial äußere Öffnung 5' der Zuführbohrung 5 gegenüber einer radial inneren Öffnung 5" der Zuführbohrung 5 entlang der zweiten Drehrichtung einen Kreiswinkelversatz α aufweist. Wie zu sehen ist, läuft die radial äußere Öffnung 5' der radial inneren Öffnung 5" bei einer Drehbewegung entlang der zweiten Drehrichtung, dargestellt durch Pfeil 6, voraus. Da die Welle 1 in einer Umgebung 9 aus Öl angeordnet ist, kann an der äußeren Öffnung 5' angesammeltes Öl bei einer Drehbewegung entlang der zweiten Drehrichtung aufgrund einer Tangentialbeschleunigung des Öls in die mindestens eine Axialbohrung 4 gefördert werden. Die Tangentialbeschleunigung verursacht eine tangentiale Beschleunigungskraft F_{TB}, welche auf das angesammelte Öl wirkt. Die tangentiale Beschleunigungskraft ergibt sich formal aus dem Zusammenhang F_{TB}= ma, wobei m die Masse des angesammelten Öls und a die tangentiale Beschleunigung ist. Aufgrund der Neigung der mindestens einen Zuführbohrung wird die auf das Öl wirkende tangentiale Beschleunigungskraft um den Faktor (sin α) reduziert. Es wirkt somit folglich eine Kraft des Betrags (sin α) F_{TB} auf das Öl, welche das Öl durch die mindestens eine Zuführbohrung 5 in die mindestens eine Axialbohrung 4 drängt. Sofern die solcherart wirkende Kraft größer als dir ebenfalls auf das angesammelte Öl wirkende Zentrifugalkraft ist, welche sich rechnerisch nach der Formel F_{Z} = mω²r ergibt, wobei F_{Z} die Zentrifugalkraft beschreibt, m die Masse des angesammelten Öls, w die Winkelgeschwindigkeit der Drehbewegung der Welle 1 und r den Radius der Welle 1 bzw. die Entfernung des angesammelten Öls von der Drehachse der Welle 1. Aufgrund der Neigung der Zuführbohrung 5, wird der Betrag der das Öl nach außen drängenden Kraft um den Faktor (cos α) verringert, wobei α der Winkel der Neigung gegen die den radialen Mittelpunkt der Welle 1 schneidende Gerade 7 ist. Um das Öl in das Innere der Welle 1, also die mindestens eine Axialbohrung 4, zu fördern, muss folglich eine Kraft des Betrags (cos α) F_{Z} überwunden werden. Abhängig von der gewählten Neigung der Zuführbohrung 5 existiert ein breites Drehzahlspektrum, in welchem die das Öl durch die Zuführbohrung 5 drängende tangentiale Beschleunigungskraft größer als die das Öl nach außen drängende Zentrifugalkraft ist. In diesem Drehzahlspektrum gilt also (sin α) F_{TB} > (cos α) F_{Z}. Somit kann auch ohne Unterstützung durch eine Fluidförderpumpe 8 Öl in die Axialbohrung 4 gefördert werden und eine Schmierung des Getriebes 3 bei Rückwärtsfahrt des Kraftfahrzeugs aufrecht erhalten werden.

Abhängig davon, ob der Kreiswinkelversatz α entlang der ersten oder entlang der zweiten Drehrichtung weist, kann bei einer Rückwärtsfahrt oder bei einer Vorwärtsfahrt eine Schmierfunktion ohne das Heranziehen einer Fluidförderpumpe 8 gewährleistet werden.

Es ist auch denkbar, mehrere Zuführbohrungen 5 vorzusehen, wobei ein Teil der Zuführbohrungen 5 einen Kreiswinkelversatz α entlang der ersten Drehrichtung aufweist und der andere Teil der Zuführbohrungen 5 einen Kreiswinkelversatz α entlang der zweiten Drehrichtung aufweist. Dies ermöglicht das Bereitstellen einer Schmierfunktion in jede Fahrtrichtung ohne das Heranziehen einer Fluidförderpumpe 8.

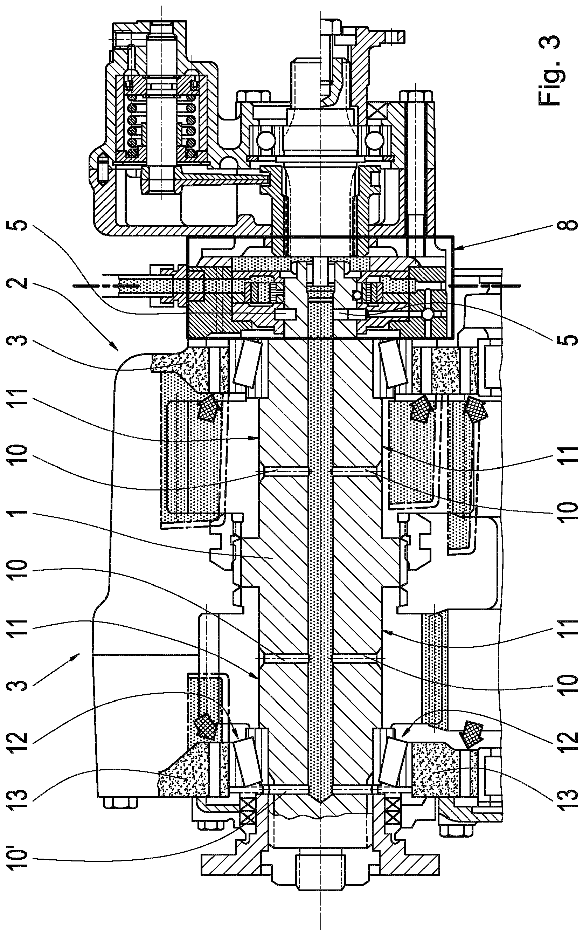

Fig. 3 zeigt beispielhaft und schematisch ein Getriebe 3 für ein Nutzfahrzeug, welches die erfindungsgemäße Anordnung 2 zum Schmieren eines Getriebes 3 umfasst. Die Anordnung 2 umfasst ihrerseits eine Welle 1 mit einer Axialbohrung 4, zwei in die Axialbohrung 4 mündende radiale Zuführbohrungen 5 und fünf in die Axialbohrung 4 mündende radiale Austrittsbohrungen 10, 10'. Die Austrittsbohrungen 10 sind jeweils einer Losradlagerung 11 zugeordnet, während die Austrittsbohrungen 10' einer Lagerung 12 der Welle 1 zugeordnet ist. Die Welle 1 ist dabei in eine erste Drehrichtung und in eine zweite Drehrichtung axial drehbar angeordnet. Weiterhin umfasst die Anordnung 2 eine Fluidförderpumpe 8, wobei die Fluidförderpumpe 8 entlang der ersten Drehrichtung der Welle 1 von der Welle 1 antreibbar ist und entlang der zweiten Drehrichtung der Welle 1 von der Welle 1 nicht antreibbar ist, also kein Öl fördern kann. Die in Fig. 3 beispielhaft gezeigte Anordnung umfasst außerdem Ölfangtaschen 13, welche dazu ausgebildet sind, von Getriebeelementen abspritzendes Öl einzusammeln und den zwei Zuführbohrungen 5 zuzuführen. Öl, das in die Axialbohrung 4 gefördert wurde, verteilt sich dort aufgrund der wirkenden Zentrifugalkraft bei einer Drehbewegung der Welle 1, so dass es zu den Austrittsbohrungen 10, 10' gelangt und durch diese, ebenfalls aufgrund der Zentrifugalkraft, austritt. Jedoch nur im Betrieb der Fluidförderpumpe 8, also nur bei einer Drehbewegung der Welle 1 entlang der ersten Drehrichtung, wird Öl druckbeaufschlagt durch die Zuführbohrungen 5 in die Axialbohrung 4 gefördert. Ohne die Druckbeaufschlagung durch die Fluidförderpumpe 8 kann das Öl bei einer Drehbewegung der Welle 1 entlang der ersten Drehrichtung nicht in die Axialbohrung 4 eindringen, da hierfür die Zentrifugalkraft überwunden werden muss. Die Zuführbohrungen 5 der Welle 1 weisen jeweils eine derartige Neigung gegen die den radialen Wellenmittelpunkt schneidende Gerade 7 auf, dass die radial äußeren Öffnungen 5' der Zuführbohrungen 5 gegenüber den radial inneren Öffnungen 5" der mindestens einen Zuführbohrung entlang der zweiten Drehrichtung den Kreiswinkelversatz α aufweist. Die Neigung der Zuführbohrungen 5 ist dabei derart ausgebildet, dass sich an der äußeren Öffnung 5' angesammeltes Öl bei einer Drehbewegung entlang der zweiten Drehrichtung aufgrund der Tangentialbeschleunigung des Öls in die Axialbohrung 4 gefördert wird. Somit kann auch bei einer Drehbewegung der Welle 1 entlang der zweiten Drehrichtung Öl in die Axialbohrung 4 gefördert werden, um weiterhin eine Schmierung der Losradlagerungen 11 und der Lagerung 12 zu gewährleisten.

### Bezugszeichen

- 1: Welle
- 2: Anordnung
- 3: Getriebe
- 4: Axialbohrung
- 5: Zuführbohrung
- 5': radial innere Öffnung
- 5": radial äußere Öffnung
- 6: zweite Drehrichtung
- 7: den radialen Wellenmittelpunkt schneidende Gerade
- 8: Fluidförderpumpe
- 9: Umgebung
- 10, 10': Austrittsbohrung
- 11: Losradlagerung
- 12: Lagerung der Welle
- 13: Ölfangtasche

## Patentansprüche

1. Anordnung (2) zum Schmieren eines Getriebes (3), umfassend eine Welle (1) mit mindestens einer Axialbohrung (4), mindestens einer in die Axialbohrung (4) mündenden radialen Zuführbohrung (5) und mindestens einer in die Axialbohrung (4) mündenden radialen Austrittsbohrung (10,10'), wobei die Welle (1) in eine erste Drehrichtung und in eine zweite Drehrichtung (6) axial drehbar angeordnet ist, **dadurch gekennzeichnet, dass** die mindestens eine Zuführbohrung (5) eine derartige Neigung gegen eine einen radialen Wellenmittelpunkt der Welle (1) schneidende Gerade (7) aufweist, dass eine radial äußere Öffnung (5') der mindestens einen Zuführbohrung (5) gegenüber einer radial inneren Öffnung (5") der mindestens einen Zuführbohrung (5) entlang der zweiten Drehrichtung (6) einen Kreiswinkelversatz (α) aufweist.

2. Anordnung (2) nach Anspruch 1,
**dadurch gekennzeichnet, dass** die Neigung derart ausgebildet ist, dass an der äußeren Öffnung (5') angesammeltes Öl bei einer Drehbewegung entlang der zweiten Drehrichtung (6) aufgrund einer Tangentialbeschleunigung des Öls in die mindestens eine Axialbohrung (4) gefördert wird.

3. Anordnung (2) nach mindestens einem der Ansprüche 1 und 2,
**dadurch gekennzeichnet, dass** die Anordnung (2) weiterhin eine Fluidförderpumpe (8) umfasst, wobei die Fluidförderpumpe (8) entlang der ersten Drehrichtung der Welle von der Welle (1) antreibbar ist und entlang der zweiten Drehrichtung (6) der Welle (1) von der Welle (1) nicht antreibbar ist.

4. Anordnung (2) nach mindestens einem der Ansprüche 1 bis 3,
**dadurch gekennzeichnet, dass** die Anordnung (2) derart ausgebildet ist, dass in die mindestens eine Axialbohrung (4) gefördertes Öl sich bei einer Drehbewegung der Welle (1) entlang der ersten Drehrichtung oder bei einer Drehbewegung der Welle (1) entlang der zweiten Drehrichtung (6) aufgrund einer Zentrifugalkraft in der mindestens einen Axialbohrung (4) verteilt und durch die mindestens eine Austrittsbohrung (10, 10') austritt.

5. Anordnung (2) nach mindestens einem der Ansprüche 1 bis 4,
**dadurch gekennzeichnet, dass** die Anordnung (2) zwei Axialbohrungen (4) umfasst, wobei die zwei Axialbohrungen (4) beabstandet zum radialen Wellenmittelpunkt angeordnet sind.

6. Anordnung (2) nach mindestens einem der Ansprüche 1 bis 5,
**dadurch gekennzeichnet, dass** die Anordnung (2) weiterhin Ölfangtaschen (13) umfasst, welche dazu ausgebildet sind, von Getriebeelementen abspritzendes Öl einzusammeln und der mindestens einen Zuführbohrung (5) zuzuführen.

7. Anordnung (2) nach mindestens einem der Ansprüche 1 bis 6,
**dadurch gekennzeichnet, dass** die mindestens eine Austrittsbohrung (10, 10') einem Maschinenelement, insbesondere einer Losradlagerung (11) zugeordnet ist.

8. Anordnung (2) nach mindestens einem der Ansprüche 1 bis 7,
**dadurch gekennzeichnet, dass** die Welle (1) mindestens eine weitere radiale Zuführbohrung (5) aufweist, wobei die mindestens eine weitere radiale Zuführbohrung (5) auf der den radialen Wellenmittelpunkt der Welle schneidenden Gerade (7) liegt.

9. Anordnung (2) nach mindestens einem der Ansprüche 1 bis 8,
**dadurch gekennzeichnet, dass** die Welle (1) mindestens eine zusätzliche Zuführbohrung umfasst, wobei die mindestens eine zusätzliche Zuführbohrung eine derartige Neigung gegen eine einen radialen Wellenmittelpunkt der Welle (1) schneidende Gerade (7) aufweist, dass eine radial äußere Öffnung (5') der mindestens einen Zuführbohrung (5) gegenüber einer radial inneren Öffnung (5") der mindestens einen Zuführbohrung (5) entlang der ersten Drehrichtung (6) einen Kreiswinkelversatz (a) aufweist.

10. Kraftfahrzeuggetriebe (3), umfassend mindestens eine Anordnung (2) nach mindestens einem der Ansprüche 1 bis 9.

11. Kraftfahrzeug, umfassend ein Getriebe (3) nach Anspruch 10.
